# EUROPEAN PATENT APPLICATION

(11) **EP 1 624 648 A1**
(43) Date of publication of application: **08.02.2006**
(21) Application number: 05017072.9
(22) Date of filing: 05.08.2005
(51) Int. Cl.: H04L 29/12, H04M 1/253

(54) **IP telephony system and Call Agent for ENUM updates**

(30) Priority: 06.08.2004 JP 2004231152
(71) Applicant: MATSUSHITA ELECTRIC INDUSTRIAL CO., LTD., Kadoma-shi, Osaka 571-8501 (JP)
(72) Inventor: Kobayashi, Kazuto, Kawasaki-shi, Kanagawa-ken, 213-0013 (JP); Miyajima, Akira, Yokohama-shi, Kanagawa-ken, 222-0023 (JP)
(74) Representative: Grünecker, Kinkeldey, Stockmair & Schwanhäusser Anwaltssozietät

(57) **Abstract**

A CPU controls the entire operation of a call agent based on a control program that is stored in a memory. When receiving, for example, from an IP telephone apparatus, a request to register a NAPTR record of a terminal apparatus, the CPU searches for corresponding user data from a user database, sends the retrieved user data to a NAPTR data converter, and stores the converted NAPTR record on an ENUM server. In addition, the CPU functions as a registration processor.

## Description

### BACKGROUND OF THE INVENTION

### 1. Field of the Invention

The present invention relates to a call agent apparatus, an IP telephone apparatus and an IP telephone system. The IP telephone system includes the call agent apparatus that stores a NAPTR resource record in an ENUM server.

### 2. Description of Related Art

Recently the Internet has been rapidly popularized. An IP telephone system has become the center of attention since a long distance communication can be performed at lower cost by using IP telephone apparatuses and since the IP telephone system enables users who have applied for the IP telephone system to communicate with each other through IP telephone apparatuses for free of charge. Additionally, an "ENUM (Telephone Number Mapping)" protocol is acknowledged as a protocol that associates the services using the Internet with the telephone numbers or associates the resources on the Internet with the telephone numbers. This ENUM protocol is specified in RFC2916 (Publication 1), which is being studied at the IETF (Internet Engineering Task Force) and the ITU-T (International Telecommunication Union-Telecommunication Standardization Sector).

The "ENUM" protocol has a function that converts a telephone number into a number corresponding to the E.164 system specified by the ITU-T and searches one of an IP address and a URI (Uniform Resource Identifier) using the mechanism of the DNS (Domain Name System) based on the converted telephone number.

An ENUM system is also being studied so that a service is provided using the "ENUM" protocol. In this ENUM system, an end user of the IP terminal apparatus, such as, for example, an IP telephone apparatus which uses the ENUM system, can select various functions (URI, the services using the URI {including telephone communication, e-mail and access to the database}). The end user, thus, needs to set the selected function into a "NAPTR (the Naming Authority Pointer)" resource record and to store the set NAPTR resource record in the ENUM system.
[Publication 1] "ENUM Trial Japan First Report" ENUM Trial Japan, May 2004

However, the end user of the conventional IP terminal apparatus, such as an IP telephone apparatus using the "ENUM" protocol, was required to set the selected function into the NAPTR resource record and to store the set NAPTR resource record in the ENUM system. It was problematic in that the storing operation became complex for the end users since the end users themselves had to store the NAPTR resource record in the ENUM system.

### SUMMARY OF THE INVENTION

The present invention is provided to address the above-described problem. The objective of the present invention is to provide a call agent apparatus, an IP telephone apparatus, and an IP telephone system that store the information after converting the user information of the IP telephone apparatus into the format configured to be registered into the ENUM server when the IP telephone apparatus is connected. The user information of the IP telephone apparatus is stored corresponding to the telephone number of the IP telephone apparatus.

The present invention relates to a call agent apparatus that controls a call connection of an IP telephone apparatus. The call agent apparatus includes a memory that stores the user information regarding a user, the user utilizing the IP telephone apparatus corresponding to the telephone number. The call agent apparatus also includes a receiver that receives a request for the registration of the terminal information transmitted from the IP telephone apparatus when the IP telephone apparatus is connected. The call agent apparatus further includes a converter that converts the user information of the IP telephone apparatus stored in the memory into the format configured to be registered in the ENUM server upon receiving the request for the registration. Additionally, the call agent apparatus includes a registration processor that stores, in the ENUM server, the user information converted by the converter.

### BRIEF DESCRIPTION OF THE DRAWINGS

The present invention is further described in the detailed description which follows, with reference to the noted plurality of drawings by way of non-limiting examples of exemplary embodiments of the present invention, in which like reference numerals represent similar parts throughout the several views of the drawings, and wherein:
Fig. 1 illustrates a network configuration to which an IP telephone system according to an embodiment of the present invention applies;
Fig. 2 illustrates a block diagram describing a configuration of an IP telephone apparatus according to the embodiment of the present invention;
Fig. 3 illustrates a block diagram describing a configuration of a call agent apparatus according to the embodiment of the present invention;
Fig. 4 illustrates a sequence diagram describing the IP telephone system according to the embodiment of the present invention; from when the IP telephone apparatus transmits, to the call agent apparatus, a request for the registration of a NAPTR record, to when voice communication between the IP telephone apparatuses is established;
Fig. 5 illustrates a drawing describing an example of the NAPTR record converted from the user data in the CA according to the embodiment of the present invention.
Fig. 6 illustrates a flow chart describing the operation of the IP telephone system according to the sequence diagram shown in Fig. 4;
Fig. 7 illustrates a flow chart describing the operation following the operation according to Fig. 6; and
Fig. 8 illustrates a front view describing the appearance of the IP telephone apparatus shown in Fig. 2.

### DETAILED DESCRIPTION OF PREFERRED EMBODIMENTS

The embodiments of the present invention are explained in the following, in reference to the above-described drawings.

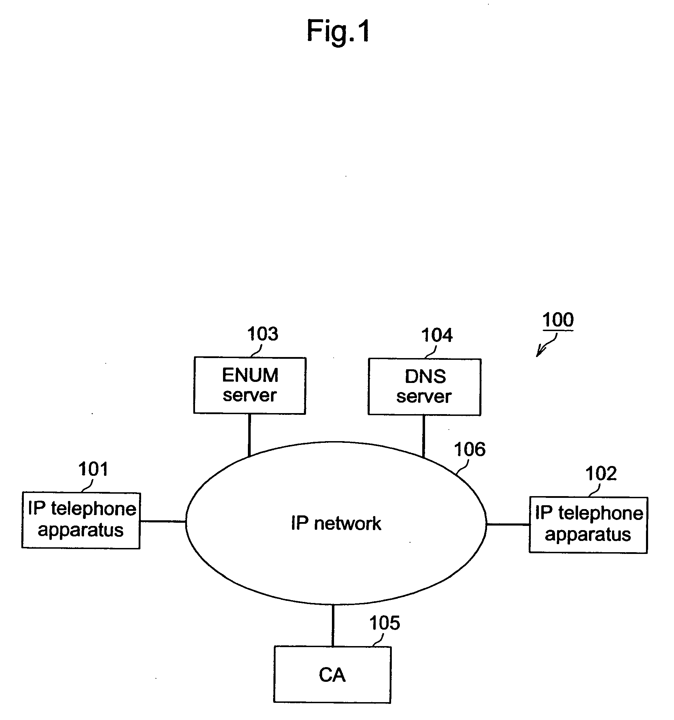

Fig. 1 is a diagram illustrating a network configuration of the IP telephone system according to the embodiment of the present invention. In Fig. 1, in IP telephone system 100, IP telephone apparatus 101, IP telephone apparatus 102, ENUM server 103, DNS server 104, and call agent apparatus (hereafter referred to as CA) 105 are mutually connected via IP network 106. Also, an IP telephone system is not limited to the configuration described in Fig. 1 and can be configured to connect to three or more telephones.

IP telephone apparatus 101 (102) has functions that enable voice communication with another IP telephone apparatus via IP network 106.

ENUM (Telephone Number Mapping) server 103 has a database that stores a NAPTR (The Naming Authority Pointer) resource record (hereafter referred to as NAPTR record). ENUM server 103 returns, to IP telephone apparatus 101 (102), the NAPTR record stored in the database, in response to the request of IP telephone apparatus 101 (102).

DNS (Domain Name System) server 104 includes a database that stores a URI (Uniform Resource Identifier) specified by the NAPTR record and stores an IP address corresponding to the URI. DNS server 104 returns, to IP telephone apparatus 101 (102), the IP address stored in the database, in response to the request of IP telephone apparatus 101 (102).

CA 105 controls a call connection between IP telephone apparatus 101 and IP telephone apparatus 102 connected to IP network 106. CA 105 receives, from IP telephone apparatus 101 (102), which is the source telephone apparatus, a request for a call connection and performs the call connection between IP telephone apparatus 102 (101), which is the destination telephone apparatus, in response to the received request.

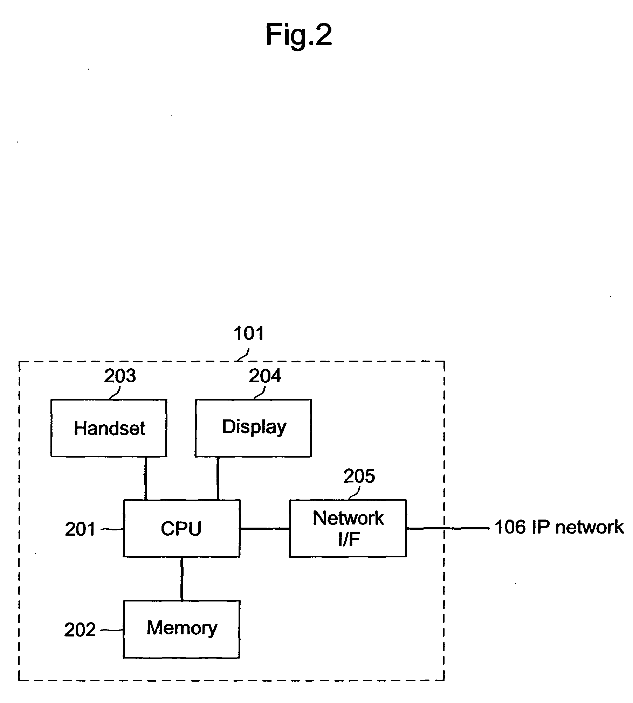

Fig. 2 is a block diagram illustrating a configuration of IP telephone apparatus 101 according to the embodiment of the present invention. IP telephone apparatus 102 has the same configuration as IP telephone apparatus 101.

In Fig. 2, IP telephone apparatus 101 is configured mainly with CPU 201, memory 202, handset 203, display 204 and network-interface (henceforth referred to as network I/F) 205.

CPU (Central Processing Unit) 201 controls operations to perform voice communication with another IP telephone apparatus 102 via IP network 106 based on the program for controlling voice communication. The program is stored in memory 202. CPU 201, therefore, controls a call between the destination terminals, according to a call control protocol, such as SIP (Session Initiation Protocol) and H. 323. CPU 201 also provides instructions necessary for display 204 and network I/F 205.

In addition, CPU 201 controls the transmission of the message "Request the NAPTR record" to ENUM server 103 and the reception of the message "Respond indicating the NAPTR information" from ENUM server 103. The message "Request the NAPTR record" is transmitted for requesting a NAPTR record corresponding to a destination terminal. The message "Respond indicating the NAPTR information" is transmitted in response to the message "Request the NAPTR record". CPU 201 also controls to automatically transmit, from network I/F 205 to CA 105, a request for the registration of the NAPTR record when the switch is initially turned ON after IP telephone apparatus 101 is installed and connected to IP network 106.

Memory 202 has a function as a ROM (Read Only Memory) that stores a program for controlling voice communication and so on that is conducted by CPU 201. Memory 202 also has a function as a RAM (Random Access Memory), which is used as a work-memory when CPU 201 performs a program.

Handset 203 outputs, to CPU 201, one of an off-hook signal and an on-hook signal, according to one of the off-hook operation and an on-hook operation performed by the user. Handset 203 also contains a microphone and a speaker. Handset 203 converts the user's transmitted voice into the transmitted voice signal and outputs, to CPU 201, the converted voice signal during voice communication between the source and destination terminals through the microphone. At the same time, handset 203 inputs, from CPU 201, the received voice signal and outputs the received voice signal as received voice via the speaker.

Display 204 is configured with a liquid crystal panel and so forth. Display 204 displays the current status of IP telephone apparatus 101 as well as the name, the address, the telephone number, etc. of the source IP telephone apparatus input by CPU 201.

Network I/F 205 is an interface for IP network 106 that is connected to IP telephone apparatus 101. Network I/F 205 further functions as a transmitter.

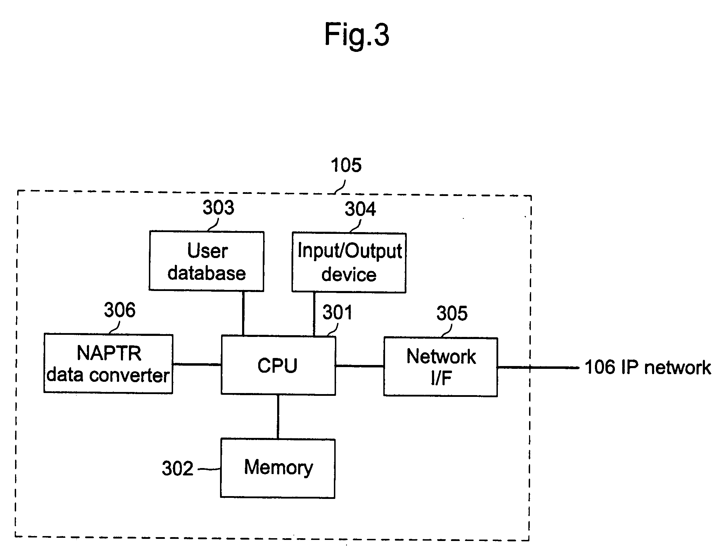

Fig. 3 is a block diagram illustrating the configuration of CA 105 according to the embodiment of the present invention. In Fig. 3, CA 105 is configured mainly with CPU 301, memory 302, user database 303, input/output device 304, network I/F 305 and NAPTR data converter 306.

CPU 301 controls the entire operation of CA 105 based on the control program stored in memory 302. Also, upon receiving, from IP telephone apparatus 101, a request for the registration of information regarding the terminal apparatus (Register), CPU 301 searches, from user database 303, which will be described later, the user data and transmits the user data to NAPTR data converter 306. CPU 301 stores, in ENUM server 103, the converted NAPTR record. CPU 301 also functions as a registration processor.

Memory 302 has a function as a ROM that stores a control program and so on that is performed by CPU 301. Memory 302 also functions as a RAM that is used as a work-memory when CPU 301 performs a program.

User database 303 stores the name, the address, the SIP telephone number, the e-mail address, the reference URL (website) as the user data of IP telephone apparatus 101 and IP telephone apparatus 102, corresponding to each of the users of IP telephone apparatus 101 and IP telephone apparatus 102.

Input/output device 304 is configured with an input device and with an output device. The input device includes a keyboard that is used when CA 105 is maintained. The output device includes a display that displays the maintenance information. Network I/F 305 is an interface to IP network 106 that is connected with CA 105. Further, network I/F 305 functions as a receiver.

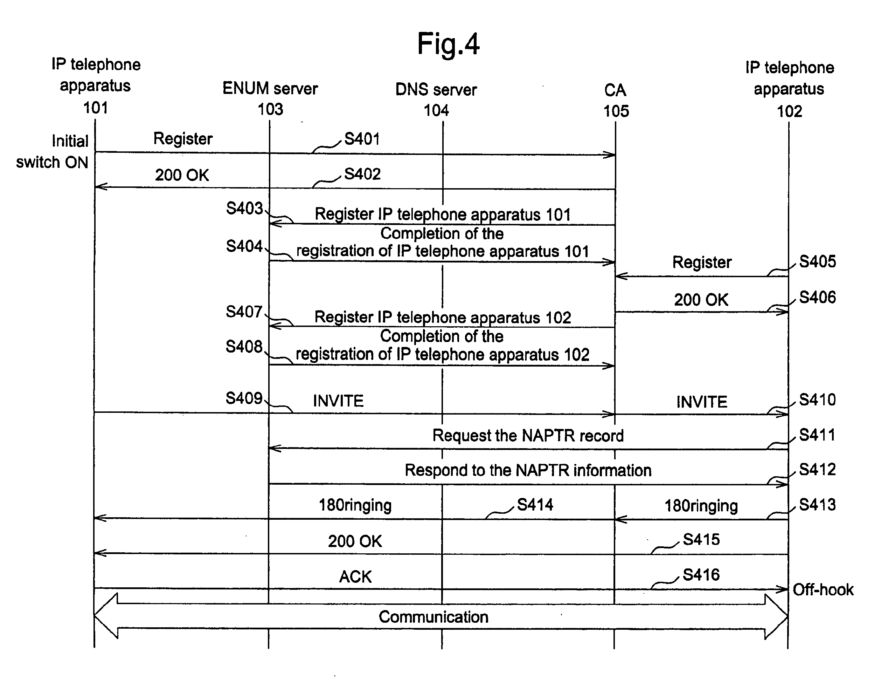

Next, the following describes the operation of IP telephone system 100 as shown in Fig. 1. The operations starts when IP telephone apparatus 101 transmits, to CA 105, a request for the registration of a NAPTR record of IP telephone apparatus 101 and ends when voice communication between IP telephone apparatus 101 and IP telephone apparatus 102 is established. The description refers to the sequence diagram shown in Fig. 4.

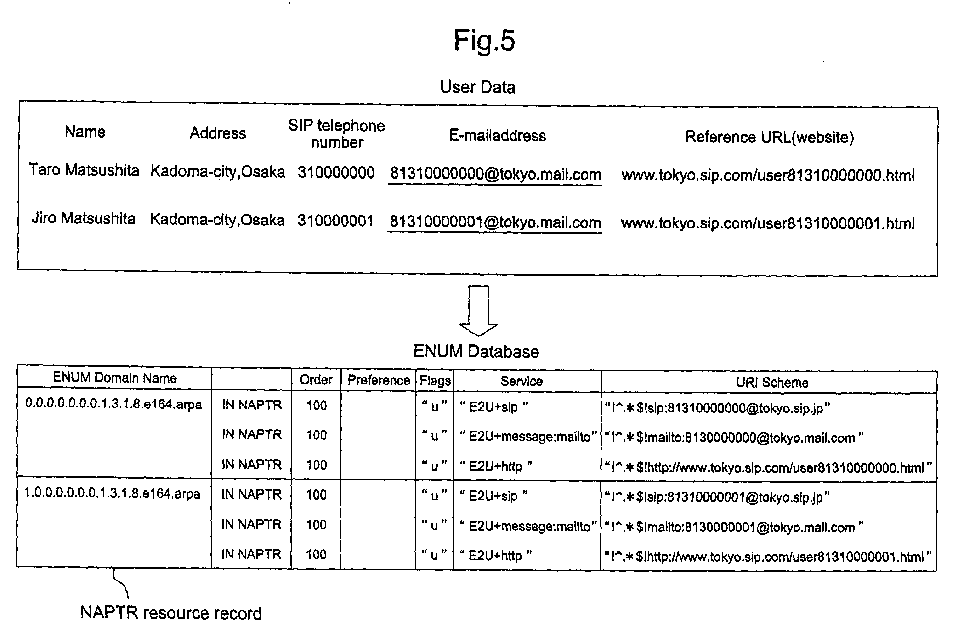

As a premise of describing the operation of Fig. 4, CA 105 previously stores, into user database 303, the user data shown in Fig. 5 as the user data of IP telephone apparatus 101 and IP telephone apparatus 102. The top line shows the user data of IP telephone apparatus 101 and the bottom line shows the user data of IP telephone apparatus 102.

In the sequence diagram shown in Fig. 4, the operation is described from when IP telephone apparatus 101 transmits, to CA 105, a request for the registration of a NAPTR record of IP telephone apparatus 101 when the switch is initially turned ON; to when CA 105 transmits, to ENUM server 103, the registration of the NAPTR record of IP telephone apparatus 101; and further to when voice communication between IP telephone apparatus 101 and IP telephone apparatus 102 is established.

When IP telephone apparatus 101 is initially turned ON after the installation process is completed for connecting, etc. IP telephone apparatus 101 to IP network 106, CPU 201 in IP telephone apparatus 101 transmits, to CA 105, a message "Register" in order to register the terminal information in CA 105 (step S401). According to the present embodiment, CA 105 stores, into ENUM server 103, a NAPTR record of IP telephone apparatus 101 when CPU 201 transmits, to CA 105, the message "Register". The message "Register" includes the SIP telephone number, the user ID, the password and so forth of IP telephone apparatus 101.

Instead of the message "Register" to register the IP telephone apparatus into the CA, the IP telephone apparatus can be configured to transmit, to the CA, a message that indicates a request for the registration of the NAPTR record into ENUM server so that the CA can perform the registration of the NAPTR record upon the request.

Upon receiving the message "Register" from IP telephone apparatus 101 via network I/F 305, CA 105 returns, to IP telephone apparatus 101, a message "200 OK" (step S402).

Next, CPU 301 in CA 105 reads, from user database 303, the user data based on the SIP telephone number of IP telephone apparatus 101 included in the message "Register". Then, CPU 301 transmits the user data to NAPTR data converter 306. NAPTR data converter 306 converts the user data transmitted from CPU 301 into a NAPTR record and transmits the converted NAPTR record to CPU 301.

Fig. 5 illustrates an example of the NAPTR record converted from the user data of IP telephone apparatus 101. The first three lines indicate the NAPTR record of IP telephone apparatus 101.

In Fig. 5, SIP telephone number "310000000" included in the user data of IP telephone apparatus 101 is converted into domain name "0.0.0.0.0.0.0.1.3.1.8. e164. arpa", URI scheme "sip: 81310000000@tokyo.sip. jp" and the service field "E2U+sip", which indicates that the destination terminal comprises the IP telephone apparatus. First, SIP telephone number "310000000" is converted into "81310000000" including the country code. Then, dots are inserted between the numbers, resulting in "8.1.3.1.0.0.0.0.0.0.0". Next, the numbers are reversed, and a data string ".e164.arpa" is added at the end and then converted into domain name "0.0.0.0.0.0.0.1.3.1.8. e164. arpa".

Furthermore, e-mail address "81310000000@tokyo.mail.com" included in the user data of IP telephone apparatus 101 is converted into URI scheme "mailto: 81310000000@tokyo.mail.com" and the service field "E2U+message: mailto", which indicates that the destination terminal can perform e-mail transmission, corresponding to domain name"0.0.0.0.0.0.0.1.3.1.8. e164. arpa". Further, reference URL "www.tokyo.sip.com/user81310000000.html" included in the user data of IP telephone apparatus 101 is converted into URI scheme "http://www.tokyo.sip.com/user81310000000.html" and the service field "E2U+http" indicating that destination terminal can deal with the HTML, corresponding to domain name "0.0.0.0.0.0.0.1.3.1.8.e164.arpa".

Also, the service field "E2U+sip", the service field "E2U+message: mailto" and the service field "E2U+http" correspond to Order=100, respectively. The order value refers to the priority of the service.

Next, CPU 301 in CA 105 transmits, from Network I/F 305 to ENUM server 103, a message "Register IP telephone apparatus 101" including the NAPTR record transmitted from NAPTR data converter 306 (step S403). Upon receiving the message "Register IP telephone apparatus 101" from CA 105, ENUM server 103 starts an application software such as "Nsupdate" and stores, into the database, the NAPTR record included in the message "Register IP telephone apparatus 101 ". Then, ENUM server 103 returns, to CA 105, a message "Completion of the registration of IP telephone apparatus 101" (step S404).

Next, when IP telephone apparatus 102 is initially turned ON after the installation process is completed for connecting, etc. IP telephone apparatus 102 to IP network 106, CPU 201 in IP telephone apparatus 102 transmits, to CA 105, a message "Register" in order to register the terminal information in CA 105 (step S405). According to the present embodiment, the message "Register" includes the SIP telephone number, the user ID, the password and so forth of IP telephone apparatus 102.

Upon receiving the message "Register" from IP telephone apparatus 102 via network I/F 305, CA 105 returns, to IP telephone apparatus 102, a message "200 OK" (step S406).

Next, CPU 301 in CA 105 reads, from user database 303, the user data based on the IP telephone number included in the message "Register". Then, CPU 301 transmits the user data to NAPTR data converter 306. NAPTR data converter 306 converts the user data transmitted from CPU 301 into a NAPTR record and transmits the converted NAPTR record to CPU 301.

Fig. 5 illustrates an example of the NAPTR record converted from the user data of IP telephone apparatus 102. The record applicable to domain name "1.0.0.0.0.0.0.1.3.1.8. e164. arpa" shown in Fig. 5 indicates the NAPTR record of IP telephone apparatus 102.

In Fig. 5, SIP telephone number "310000001" included in the user data of IP telephone apparatus 102 is converted into domain name "1.0.0.0.0.0.0.1.3.1.8. e164. arpa", URI scheme "sip: 81310000001@tokyo.sip. jp" and the service field "E2U+sip", which indicates that the destination terminal comprises the IP telephone apparatus.

Furthermore, e-mail address "81310000001@tokyo.mail.com" included in the user data of IP telephone apparatus 102 is converted into URI scheme "mailto: 81310000001@tokyo.mail.com" and the service field "E2U+message: mailto", which indicates that the destination terminal can perform e-mail transmission, corresponding to domain name "1.0.0.0.0.0.0.1.3.1.8. e164. arpa". Further, reference URL "www.tokyo.sip.com/user81310000001.html" included in the user data of IP telephone apparatus 102 is converted into URI scheme "http://www.tokyo.sip.com/user81310000000.html" and the service field "E2U+http" indicating that destination terminal can deal with the HTML, corresponding to domain name "1.0.0.0.0.0.0.1.3.1.8.e164,arpa".

Also, the service field "E2U+sip", the service field "E2U+message: mailto" and the service field "E2U+http" correspond to Order=100, respectively. The order value refers to the priority of the service.

Next, CPU 301 in CA 105 transmits, from Network I/F 305 to ENUM server 103, a message "Register IP telephone apparatus 102" including the NAPTR record transmitted from NAPTR data converter 306 (step S407). Upon receiving the message "Register IP telephone apparatus 102" from CA 105, ENUM server 103 starts an application software such as "Nsupdate" and stores, into the database, the NAPTR record included in the message "Register IP telephone apparatus 102". Then, ENUM server 103 returns, to CA 105, a message "Completion of the registration of IP telephone apparatus 102" (step S408).

With the above-described processes, IP telephone apparatus 101 and IP telephone apparatus 102 complete the process for registering respective NAPTR records into ENUM server 103.

Next, when the user of IP telephone apparatus 101 places a call to IP telephone apparatus 102 by dialing the SIP telephone number of "310000001", IP telephone apparatus 101 transmits, from network I/F 205 to CA 105, a message "INVITE", in which the SIP telephone number of "310000001"is specified (step S409).

Upon receiving the message "INVITE" from IP telephone apparatus 101, CA 105 recognizes the SIP telephone number of IP telephone apparatus 102, which is the call destination, based on "To" header included in the message "INVITE". Then, CA 105 transmits, to IP telephone apparatus 102, which is the call destination, the message "INVITE" (step S410).

Upon receiving the message "INVITE" from CA 105, IP telephone apparatus 102 transmits, to ENUM server 103, a message "Request the NAPTR record". This message is a request for the NAPTR record of IP telephone apparatus 101, which is the source telephone apparatus (step S411). Upon receiving the message "Request the NAPTR record" from IP telephone apparatus 102, ENUM server 103 extracts the NAPTR record of IP telephone apparatus 101 stored in the database. Then, ENUM server 103 returns, to IP telephone apparatus 102, the message "Respond indicating the NAPTR information" including the NAPTR record of IP telephone apparatus 101 (step S412).

Next, upon receiving, from ENUM server 103, the message "Respond indicating the NAPTR information", IP telephone apparatus 102 sounds a ringing tone to notify the user that a call is being received and transmits, to CA 105, a message "180 ringing" (step S413). IP telephone apparatus 102 displays the user information of IP telephone apparatus 101 on display 204 based on the NAPTR record of IP telephone apparatus 101 included in the message "Respond indicating the NAPTR information". The user of IP telephone apparatus 102 can confirm the user of the source IP telephone apparatus 101 based on the information displayed on display 204.

CA 105 transmits, to IP telephone apparatus 101, which is the source IP telephone apparatus, the message "180 ringing" received from IP telephone apparatus 102 (step S414). When IP telephone apparatus 101 receives the message "180 ringing" from CA 105, the speaker of handset 203 produces a ring-back tone in order to notify the user that IP telephone apparatus 102, which is the call destination, is being called.

Upon detecting that the operation of handset 203 has been taken off the hook by the user of IP telephone apparatus 102, which is the call destination, IP telephone apparatus 102 transmits, to IP telephone apparatus 101, the message "200 OK" that indicates a connection has been approved (step S415). Upon receiving the message "200 OK" from IP telephone apparatus 102, IP telephone apparatus 101 transmits the message "ACK" to IP telephone apparatus 102 (step S416). When IP telephone apparatus 102 receives the message "ACK" from IP telephone apparatus 101, voice communication becomes available between IP telephone apparatus 101 and IP telephone apparatus 102.

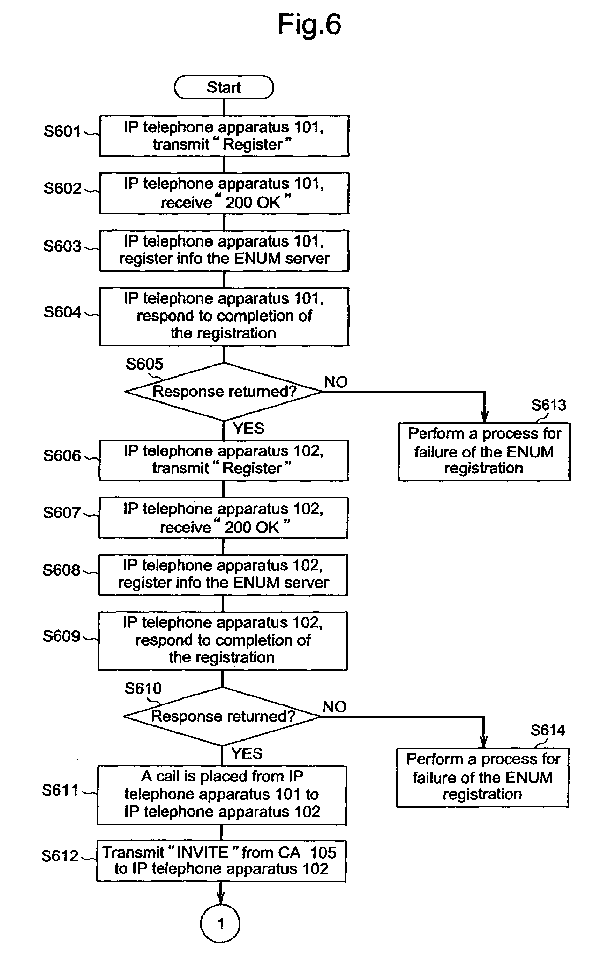

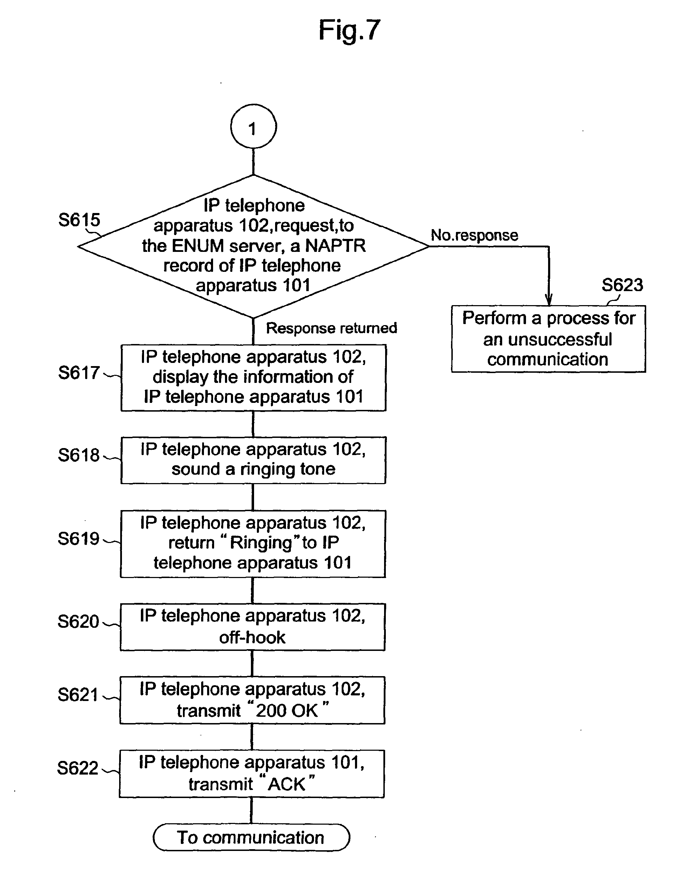

Next, the following describes the operation of IP telephone apparatus 101, CA 105 and IP telephone apparatus 102 according to the sequence diagram shown in Fig. 4 with reference to the flowcharts shown in Fig. 6 and Fig. 7.

First, the user data of IP telephone apparatus 101 and IP telephone apparatus 102 shown in Fig. 5 are stored in user database 303 in CA 105.

When IP telephone apparatus 101 is initially turned ON after the installation process is completed for connecting, etc. IP telephone apparatus 101 to IP network 106, CPU 201 in IP telephone apparatus 101 transmits, to CA 105, a message "Register" in order to register the terminal information in CA 105 (step S601) and receives the message "200 OK" from CA 105 (step S602). According to the embodiment of the present invention, when IP telephone apparatus 101 transmits, to CA 105, a message "Resister", CA 105 stores a NAPTR record into ENUM server 103.

Next, CA 105 reads, from user database 303, the user data, based on the SIP telephone number included in the message "Register" that is received from IP telephone apparatus 101. Then, NAPTR data converter 306 converts the user data into a NAPTR record. CA 105 transmits, to ENUM server 103, a message "Register IP telephone apparatus 101" including the converted NAPTR record (step S603).

Next, upon receiving the message "Register IP telephone apparatus 101" from CA 105, ENUM server 103 stores the NAPTR record in the database and returns, to CA 105, a message "Completion of the registration of IP telephone apparatus 101" (step S604).

Next, CA 105 determines whether or not the message "Completion of the registration of IP telephone apparatus 101" is returned from ENUM server 103 (step S605). When CA 105 receives, from ENUM server 103, the message "Completion of the registration of IP telephone apparatus 101" (step S605: YES), CA 105 completes the registration of the NAPTR record of IP telephone apparatus 101.

Next, when IP telephone apparatus 102 is initially turned ON after the installation process is completed for connecting IP telephone apparatus 102 to IP network 106, CPU 201 in IP telephone apparatus 102 transmits, to CA 105, a message "Register" in order to register the terminal information in CA 105 (step S606) and receives the message "200 OK" from CA 105 (step S607).

Next, CA 105 reads, from user database 303, the user data, based on the SIP telephone number included in the message "Register" that is received from IP telephone apparatus 102. Then, NAPTR data converter 306 converts the user data into a NAPTR record. CA 105 transmits, to ENUM server 103, a message "Register IP telephone apparatus 102" including the converted NAPTR record (step S608).

Next, upon receiving the message "Register IP telephone apparatus 102" including the NAPTR record from CA 105, ENUM server 103 registers the NAPTR record in the database and returns, to CA 105, a message "Completion of the registration of IP telephone apparatus 102" (step S609).

Next, CA 105 determines whether or not the message "Completion of the registration of IP telephone apparatus 102" is returned from ENUM server 103 (step S610). When CA 105 receives, from ENUM server 103, the message "Completion of the registration of IP telephone apparatus 102" (step S610: YES), CA 105 completes the registration of the NAPTR record of IP telephone apparatus 102.

Additionally, in step S605, upon determining that no message "Completion of the registration of IP telephone apparatus 101" is returned from ENUM server 103 (step S605: NO), CA 105 transmits, to IP telephone apparatus 101, a message indicating failure of registration as a predetermined process, the predetermined process being performed when the registration to ENUM server 103 has failed (step S613). Likewise, upon determining that no message "Completion of the registration of IP telephone apparatus 102" is returned from ENUM server 103 (step S610: NO), CA 105 transmits, to IP telephone apparatus 102, a message indicating failure of registration as a predetermined process, the predetermined process being performed when the registration to ENUM server 103 has failed (step S614).

Next, when the user of IP telephone apparatus 101 places a call to IP telephone apparatus 102 by dialing the SIP telephone number of "310000001", IP telephone apparatus 101 transmits, from network I/F 205 to CA 105, a message "INVITE", in which the SIP telephone number of "310000001"is specified (step S611).

Upon receiving the message "INVITE" from IP telephone apparatus 101, CA 105 recognizes the SIP telephone number of IP telephone apparatus 102, which is the call destination, based on "To" header that is included in the message "INVITE". CA 105 transmits, to IP telephone apparatus 102, which is the call destination, the message "INVITE" (step S612).

Next, upon receiving the message "INVITE" from CA 105, IP telephone apparatus 102 transmits, to ENUM server 103, the message "Request the NAPTR record". This message is a request for the NAPTR record of IP telephone apparatus 101, which is the source IP telephone apparatus. Then, IP telephone apparatus 102 determines whether a response is returned from ENUM server 103 (step S615). Upon receiving, from ENUM server 103, the message "Respond indicating the NAPTR information" including the NAPTR record of IP telephone apparatus 101 (step S615: YES), IP telephone apparatus 102 obtains, based on the information of the response, the e-mail address, the website URL, etc. stored in the NAPTR record shown in Fig. 5 as well as the telephone number of IP telephone apparatus 101.

IP telephone apparatus 102 displays the user information (telephone number, e-mail address and website URL) of IP telephone apparatus 101 on display 204 (step S617).

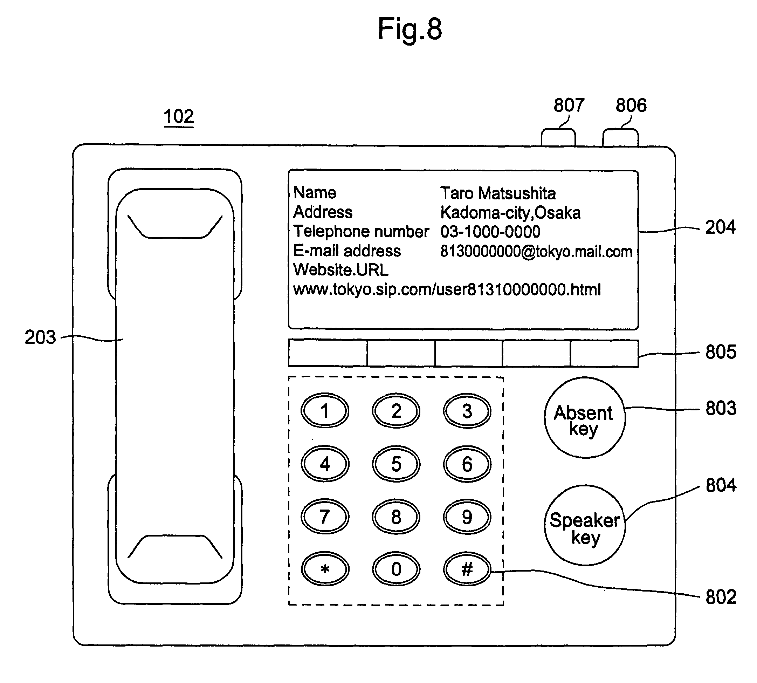

Fig. 8 shows a display example of the user information. Fig. 8 is a front view illustrating the appearance of IP telephone apparatus 102. IP telephone apparatus 101 has the same configuration.

In Fig. 8, IP telephone apparatus 102 (101) includes a microphone, handset 203, ten-key pad 802, absent key 803, speaker key 804 and function key 805. The microphone receives a user's voice. Handset 203 has a speaker that outputs the received voice. Ten-key pad 802 inputs telephone numbers and so on. Absent key 803 indicates that the user of the IP telephone apparatus is not available. Absent key 803 can switch on and off the answering machine telephone function. Speaker key 804 switches output of the voice from the speaker of handset 203 to an external speaker. Function key 805 can set various functions such as a one-touch key function. On the side area, IP telephone apparatus 102 (101) contains LAN interface (LAN I/F) 806 and public line interface (public line I/F) 807. The LAN interface is connected to IP network 106. The public line interface is connected to the public line network.

Above function key 805, display 204 is provided. Display 204 is configured with a liquid crystal panel and so on. Display 204 displays the source IP telephone number, the e-mail address, the website URL based on the NAPTR record received from ENUM server 103 and the name, the address, etc. registered in the telephone directory of the IP telephone apparatus corresponding to the source IP telephone number. Fig. 8 illustrates an instance where display 204 is configured to display the name, the address, the telephone number, the e-mail address and website URL of IP telephone apparatus 101, which is the source IP telephone apparatus. The user of IP telephone apparatus 102 can confirm the user of the source IP telephone apparatus and determine whether or not to perform voice communication. Further, the user of IP telephone apparatus 102 can obtain the e-mail address of the source IP telephone apparatus.

Next, IP telephone apparatus 102 sounds a ringing tone to notify the user that a call is being received (step S618) and returns, to IP telephone apparatus 101, which is the source IP telephone apparatus, the message "180 ringing" via CA 105 (step S619).

Next, upon detecting that the operation of handset 203 has been taken off the hook by the user of IP telephone apparatus 102 (step S 620), which is the call destination, IP telephone apparatus 102 transmits the message "200 OK" that indicates a connection has been approved to IP telephone apparatus 101 (step S621). Upon receiving the message "200 OK" from IP telephone apparatus 102, IP telephone apparatus 101 transmits the message "ACK" to IP telephone apparatus 102 (step S622). When IP telephone apparatus 102 receives the message "ACK" from IP telephone apparatus 101, voice communication becomes available between IP telephone apparatus 101 and IP telephone apparatus 102.

Also, when no response is returned from ENUM server 103 in step S615 (step S615: NO), IP telephone apparatus 102 performs a process indicating that the communication was unsuccessful in order to notify IP telephone apparatus 101 that the communication has failed (step S623).

As described above, in an IP telephone system according to the embodiment of the present invention, CA 105 previously stores, in user database 303, the user data of IP telephone apparatus 101 and IP telephone apparatus 102. IP telephone apparatus 101 and IP telephone apparatus 102 complete the installation such as the connection etc. to IP network 106. Then, when the switch is initially turned ON, IP telephone apparatus 101 and IP telephone apparatus 102 transmit, to CA 105, a message "Register" in order to register the terminal information into CA 105. Upon receiving the message "Register" from IP telephone apparatus 101 and IP telephone apparatus 102, NAPTR data converter 306 in CA 105 converts the user data stored in user database 303 into a NAPTR record. CA 105 performs a registration of the NAPTR record into ENUM server 103.

Accordingly, each of the users of IP telephone apparatus 101 and IP telephone apparatus 102 can register the apparatus information into ENUM server 103 simply by transmitting, to CA 105, a request for the registration of information regarding the terminal apparatus. Thus, each of the users of IP telephone apparatus 101 and IP telephone apparatus 102 is saved the trouble of storing a NAPTR record in ENUM server 103. Each of the users of IP telephone apparatus 101 and IP telephone apparatus 102 is also saved the trouble of providing the instruction to store the NAPTR record in ENUM server 103. As a result, the user of the IP telephone apparatus will be provided with a user-friendly IP telephone system.

It is noted that the foregoing examples have been provided merely for the purpose of explanation and are in no way to be construed as limiting of the present invention. While the present invention has been described with reference to exemplary embodiments, it is understood that the words which have been used herein are words of description and illustration, rather than words of limitation. Changes may be made, within the purview of the appended claims, as presently stated and as amended, without departing from the scope and spirit of the present invention in its aspects. Although the present invention has been described herein with reference to particular structures, materials and embodiments, the present invention is not intended to be limited to the particulars disclosed herein; rather, the present invention extends to all functionally equivalent structures, methods and uses, such as are within the scope of the appended claims.

The present invention is not limited to the above described embodiments, and various variations and modifications may be possible without departing from the scope of the present invention.

This application is based on the Japanese Patent Application No. 2004 - 231152 filed on August 6, 2004 entire content of which is expressly incorporated by reference herein.

## Claims

1. A call agent apparatus connected to an IP telephone apparatus and to an ENUM server, the ENUM server being capable of storing a NAPTR (Naming Authority Pointer) resource record of the IP telephone apparatus, the call agent apparatus comprising:
a memory configured to store predetermined information regarding a user of the IP telephone apparatus corresponding a telephone number of the IP telephone apparatus;
an interface configured to receive, from the IP telephone apparatus, a request for registering the NAPTR of the IP telephone apparatus in the ENUM server;
a controller configured to convert the predetermined information stored in the memory into the NAPTR resource record of the IP telephone apparatus, and to transmit, to the ENUM server, the converted NAPTR resource record of the IP telephone apparatus in response to the request, whereby the ENUM server can register the NAPTR resource record of the IP telephone apparatus in the ENUM server.

2. The call agent apparatus according to claim 1, wherein, when the IP telephone apparatus is turned ON, the IP telephone apparatus transmits, to the call agent apparatus, the request for registering the NAPTR of the IP telephone apparatus in the ENUM server.

3. The call agent apparatus according to claim 1, wherein the predetermined information comprises one of a name of the user, an address of the user, the telephone number of the IP telephone apparatus, an e-mail address of the user, and a reference URL of the user.

4. The call agent apparatus according to claim 3, wherein the controller converts the telephone number of the IP telephone apparatus into a domain name of the NAPTR resource record.

5. The call agent apparatus according to claim 3, wherein the controller converts the telephone number of the IP telephone apparatus into a URI scheme of the NAPTR resource record.

6. The call agent apparatus according to claim 3, wherein the controller generate a Service Field of the NAPTR resource record, based on the telephone number of the IP telephone apparatus.

7. The call agent apparatus according to claim 3, wherein the controller converts the e-mail address of the user into a URI scheme of the NAPTR resource record.

8. The call agent apparatus according to claim 3, wherein the controller generate a Service Field of the NAPTR resource record, based on the e-mail address of the user.

9. The call agent apparatus according to claim 3, wherein the controller converts the reference URI of the user into a URI scheme of the NAPTR resource record.

10. The call agent apparatus according to claim 3, wherein the controller generate a Service Field of the NAPTR resource record, based on the reference URI of the user.

11. An IP telephone apparatus connected to a call agent apparatus and to an ENUM server, the call agent apparatus storing predetermined information regarding a user of the IP telephone apparatus corresponding a telephone number of the IP telephone apparatus, the ENUM server being capable of storing a NAPTR (Naming Authority Pointer) resource record of the IP telephone apparatus, the IP telephone apparatus comprising:
a controller configured to transmit, to the call agent, a request for registering the NAPTR resource record of the IP telephone apparatus in the ENUM server when the IP telephone apparatus is turned ON, whereby the call agent apparatus converts the stored predetermined information into the NAPTR resource record of the IP telephone apparatus, and transmits, to the ENUM server, the converted NAPTR resource record of the IP telephone apparatus in response to the request.

12. An IP telephone system comprising:
an IP telephone apparatus;
a call agent apparatus configured to store predetermined information regarding a user of the IP telephone apparatus corresponding a telephone number of the IP telephone apparatus; and
an ENUM server configured to include a memory for storing a NAPTR (Naming Authority Pointer) resource record of the IP telephone apparatus,
the call agent apparatus being further configured to:
receive, from the IP telephone apparatus, a request for registering the NAPTR of the IP telephone apparatus in the ENUM server;
convert the predetermined information stored in the memory into the NAPTR resource record of the IP telephone apparatus; and
transmit, to the ENUM server, the converted NAPTR resource record of the IP telephone apparatus to the response to the request, whereby the ENUM server can register the NAPTR resource record of the IP telephone apparatus in the memory of the ENUM server.
